# EUROPÄISCHE PATENTANMELDUNG

(11) **EP 1 234 800 A1**
(43) Veröffentlichungstag der Anmeldung: **28.08.2002**
(21) Anmeldenummer: 01104269.4
(22) Anmeldetag: 22.02.2001
(51) Int. Cl.: C01F 7/30, C01B 33/26, C09K 3/14, C09G 1/02

(54) **Wässrige Dispersion, Verfahren zu ihrer Herstellung und Verwendung**

(71) Anmelder: Degussa Aktiengesellschaft, 40474 Düsseldorf (DE)
(72) Erfinder: Mangold, Helmut, Dr., 63517 Rodenbach (DE); Menzel, Frank, Dr., 63456 Hanau (DE); Lortz, Wolfgang, Dr., 63607 Wächtersbach (DE)

(57) **Zusammenfassung**

Wässerige Dispersion, die ein Silizium-Aluminium-Mischoxid-Pulver mit Si-O-Al-Bindungen und 0,1 bis 99,9Gew.-% Al₂O₃ enthält und eine definierte Struktur aus amorphen Siliziumdioxidbereichen und kristallinen Aluminiumoxidbereichen aufweist. Sie kann hergestellt werden, indem man die zu dispergierenden Teilchen bei hohem Druck über eine Düse entspannt und miteinander oder gegen Wandbereiche der Vorrichtung kollidieren läßt. Sie kann zum chemisch-mechanischen Polieren von Halbleitersubstraten eingesetzt werden.

## Beschreibung

Die Erfindung betrifft wässerige Dispersionen, die ein Silizium-Aluminium-Mischoxid-Pulver enthalten, ein Verfahren zur deren Herstellung, sowie deren Verwendung zum Polieren von Halbleitersubstraten.

Das chemisch-mechanische Polieren (CMP-Prozeß) ist eine Technologie, die zum Planarisieren von Oberflächen und zur Herstellung von Strukturen bis in den Submikrometerbereich auf Halbleiterwafern eingesetzt wird. Dabei findet eine Dispersion Verwendung, die neben einer chemisch aktiven Verbindung ein Abrasiv enthält. Diesem kommt besondere Bedeutung zu, da es eine hohe Abtragrate aufweisen soll ohne Kratzer auf der zu polierenden Oberfläche zu erzeugen.

Es hat sich nun gezeigt, dass je nach Polieraufgabe es sinnvoll sein kann physikalische Mischungen von Abrasivpartikeln einzusetzen und so die Vorteile beider Mischungspartner zu vereinen.

In US 5 891 205 ist eine Dispersion für den CMP-Prozeß beschrieben, die ein physikalisches Gemisch aus Ceroxid und Siliziumdioxid als abrasiv enthält. Physikalisch bedeutet hierbei, dass die Dispersion Ceroxidteilchen und Siliziumdioxidteilchen enthält, die getrennt vorliegen.

Ebenfalls eine physikalische Mischung aus Ceroxidteilchen und Siliziumdioxidteilchen beschreibt US 5 382 272, wobei hier eine Adsorption der Ceroxidteilchen auf den Siliziumdioxidteilchen zu einem positiven Effekt beim chemisch-mechanischen Polieren führen soll. Problematisch ist hierbei oft, dass wichtige Parameter, wie zum Beispiel die Teilchengrößen und das Verhalten in verschiedenen pH-Bereichen nicht zueinander passen. Dies führt dazu, dass der erwartete Effekt schon im Vorfeld scheitert, wenn sich keine stabile wässerige Dispersion aus unterschiedlichen Teilchen herstellen läßt.

Die Verwendung von chemischen Mischungen von Metalloxiden oder Metalloidoxiden ist in verschiedenen Patentschriften beschrieben. So beschreibt zum Beispiel US 5858813 und 5954997 die Verwendung von chemischen Mischungen von Oxiden im CMP-Prozeß. Die dort beschriebenen chemischen Mischungen zeigen im Vergleich zu nur aus einer Molekülsorte bestehenden Abrasiven keine Unterschiede bezüglich ihres Polierverhaltens. Dies bedeutet, dass ein spezielles Polierergebnis, das zum Beispiel mit Siliziumdioxid oder Aluminiumoxid erzielt wurde, alternativ auch mit den dort beschriebenen Mischoxiden erreicht werden kann.

WO 9905232 A1 beschreibt im Rahmen einer CMP-Dispersion die Herstellung von Siliziumdioxid mit einem Dotierstoff. Durch die Dotierung soll die Härte der Abrasiv-Partikel beim chemisch-mechanischen Polieren variiert werden können. Nachteilig ist, dass der Dotierstoff nur in einem engen Bereich zugegeben werden kann, und so der Effekt beim chemisch-mechanischen Polieren nur gering ist.

Es besteht also reges Interesse an der Verwendung von Mischoxiden beim chemisch mechanischen Polieren. Bislang ist es jedoch noch nicht oder nur eingeschränkt gelungen die Vorteile eines chemischen Mischoxides beim chemisch-mechanischen Polieren darzulegen. Dies ist auch darauf zurückzuführen, dass in der bislang bekannten Patentliteratur die in der Dispersion suspendierten Teilchen nicht oder nur ungenau beschrieben sind. Daher sind auch keine einheitlichen reproduzierbaren Polierergebnisse zu erwarten.

Die Aufgabe der Erfindung ist es eine wässerige Dispersion bereitzustellen, die als Abrasiv ein Mischoxid enthält, das aus exakt definierten Teilchen besteht.

Gegenstand der Erfindung ist eine wässerige Dispersion, die ein Silizium-Aluminium-Mischoxid-Pulver mit 0,1 bis 99,9 Gew.-% Al₂O₃ enthält, und eine Struktur mit Si-O-Al-Bindungen und amorphe Siliziumdioxidbereiche und kristalline Aluminiumoxidbereiche aufweist.

Bevorzugt sind wässerige Dispersionen, die Pulver aus Primärteilchen aus amorphem Siliziumdioxid und kristallinem Aluminiumoxid aus einem flammenhydrolytischen Prozeß enthalten.

Die Herstellung dieser Partikel ist bereits in EP-A-1048617 beschrieben. Silizium- und Aluminiumhalogenide werden in einem bestimmten Verhältnis zueinander verdampft, und mit einem Traggas in einer Mischeinheit mit Luft, Sauerstoff und Wasserstoff homogen gemischt, diese Mischung in einem Brenner bekannter Bauart verbrannt, und nach der Abtrennung der Feststoffe von der Gasphase gegebenenfalls am Produkt anhängende Halogenidreste durch einen weiteren Verfahrensschritt mit feuchter Luft bei erhöhter Temperatur abgetrennt.

Weiterhin kann die Dispersion, ein Silizium-Aluminium-Mischoxid mit einer Mullitstruktur mit der chemischen Zusammensetzung von 3 Al₂O₃ x 2 SiO₂ bis zu 2 Al₂O₃ x SiO₂ enthalten. Die Synthese dieser Teilchen ist aus Ullmann's Enzyklopädie der technischen Chemie, 4. Auflage, Band A 23, S. 694 bekannt.

Weiterhin kann die wässerige Dispersion mittels Aerosol mit Aluminiumoxid dotierte, in einem flammenhydrolytischen Prozeß hergestellte Siliziumdioxidpartikel, die mittels der Methode des Spray-Doping wie in DE-A-19847161 beschrieben, hergestellt werden können, enthalten.

Die Herstellung der mittels Aerosol mit Aluminiumoxid dotierten pyrogen hergestellten Siliziumdioxides erfolgt derart, dass man in eine Flamme, wie sie zur pyrogenen Herstellung von Kieselsäure nach der Art der Flammenoxidation oder bevorzugt der Flammenhydrolyse benutzt wird, ein Aerosol einspeist, das Aerosol vor der Reaktion mit dem Gasgemisch der Flammenoxidation beziehungsweise Flammenhydrolyse homogen mischt, dann das Aerosol-Gasgemisch in der Flamme abreagieren läßt und die entstandenen mit Aluminiumoxid dotierten pyrogen hergestellten Siliziumdioxidpartikel in bekannter Weise vom Gasstrom abtrennt, wobei zur Herstellung des Aerosols eine wässerige Lösung dient, die Salze oder Salzmischungen des Aluminiums oder das Metall selbst in gelöster oder suspendierter Form oder Mischungen davon enthält. Als Salze können eingesetzt werden: AlCl₃, Al₂(SO₄)₃, Al(NO₃)₃.

Weiterhin kann die Dispersion mit Aluminiumoxid, vollständig oder teilweise , umhüllte Siliziumdioxidpartikel, beziehungsweise mit Siliziumdioxid vollständig oder teilweise umhüllte Aluminiumoxidpartikel, die nach dem Stand der Technik durch Calcinierung und Vermahlung erhalten werden können, enthalten.

Insbesondere kann die wässerige Dispersion auch Mischungen aus zwei oder mehr der genannten Partikel, nämlich Primärteilchen aus amorphem Siliziumdioxid und kristallinem Aluminiumoxid, über Si-O-Al-Einheiten verknüpft, Mullitstrukturen mit einer Zusammensetzung von 3 Al₂O₃ x 2 SiO₂ bis zu 2 Al₂O₃ x SiO₂ mit Siliziumdioxid dotiertes Aluminiumoxid oder mit Aluminiumoxid dotiertes Siliziumdioxid enthalten.

Das kristalline Aluminiumoxid kann die Modifikationen, alpha-, gamma-, delta-, theta- und kappa-Aluminiumoxid, sowie das nach seinem Herstellungsprozeß pyrogen genannte Aluminiumoxid und Mischungen der vorgenannten Aluminiumoxide umfassen.

Die BET-Oberfläche der Silizium-Aluminium-Mischoxidpartikel in der Dispersion liegt in einer bevorzugten Ausführungsform der Erfindung zwischen 5 und 600 m²/g. Besonders bevorzugt ist ein Bereich zwischen 50 und 200 m²/g. Innerhalb dieses Bereiches zeigt die Dispersion eine gute Stabilität.

Der Feststoffgehalt der das Mischoxid enthaltenden Dispersion richtet sich in erster Linie nach der beabsichtigten Verwendung. Um Transportkosten einzusparen wird man eine Dispersion mit möglichst hohem Feststoffgehalt anstreben, während bei bestimmten Anwendungen, wie zum Beispiel beim chemisch-mechanischen Polieren, Dispersionen mit niedrigen Feststoffgehalten eingesetzt werden. Bevorzugt gemäß der Erfindung ist ein Feststoffgehalt von 0,1 bis 70 Gew.-%., besonders bevorzugt der Bereich zwischen 1 und 30 Gew.-%. In diesem Bereich zeigt die Dispersion eine gute Stabilität.

Der pH-wert der Dispersion kann in einem weiten pH-Bereich von ca. 4-12,5 durch Zugaben von basisch oder sauer wirkenden Substanzen variiert werden. Als basisch wirkende Substanzen werden insbesondere Ammoniak, Kaliumhydroxid und Tetramethylammoniumhydroxid eingesetzt. Als saure Substanzen können anorganische Mineralsäuren sowie Carbonsäuren verwendet werden.

Daneben kann die erfindungsgemäße Dispersion auch ein Oxidationsmittel enthalten, welches beim chemisch-mechanischen Polieren von Metallschichten dazu dient die Metalle zu den entsprechenden Oxiden zu oxidieren, die anschließend mechanisch entfernt werden. Als Oxidationsmittel können Verwendung finden: Wasserstoffperoxid, Wasserstoffperoxid-Addukte, organische und anorganische Persäuren, Iminopersäuren, Persulfate, Perborate, Percarbonate, oxidierende Metallsalze und/oder Mischungen daraus.

Das Oxidationsmittel kann unmittelbar vor dem Polierprozeß der Dispersion zugefügt werden um damit Zersetzungsverluste des Oxidationsmittels hervorgerufen durch die Mischoxidpartikel zu minimieren.

Weiterhin kann die erfindungsgemäße Dispersion einen Oxidationsaktivator enthalten, dessen Zweck es ist die Oxidationsgeschwindigkeit beim chemisch-mechanischen Polieren zu erhöhen. Der Katalysator kann als Elektronentransfer-Vehikel zwischen dem Oxidationsmittel und der Metalloberfläche wirken, oder aber aktive Spezies mit dem Oxidationsmittel bilden. Hierunter fällt zum Beispiel die Bildung von Hydroxylradikalen oder Percarbonsäuren aus Wasserstoffperoxid. Geeignete Oxidationskatalysatoren sind die Metallsalze von Ag, Co, Cr, Cu, Fe, Mo, Mu, Ni, Os, Pd, Ru, Sn, Ti, V und Mischungen daraus. Weiterhin sind Carbonsäuren, Nitrile, Harnstoffe, Amide und Ester geeignet.

Ferner kann die erfindungsgemäße Dispersion Korrosionsinhibitoren enthalten. Diese sollen die Umwandlung der Metalloberfläche in lösliche Verbindungen durch Korrosion hemmen und so die Metalloberfläche für die Oxidation des Metalles zum Metalloxides erhalten, welches anschließend mechanisch durch ein Abrasiv entfernt wird. Geeignete Inhibitoren umfassen die Gruppe von Stickstoff enthaltenden Heterocylen wie Benzotriazol, substituierte Benzimidazole, substituierte Pyrazine, substituierte Pyrazole und deren Mischungen.

Da einige Korrosionsinhibitoren gleichzeitig auch das Oxidationsmittel zersetzen können, besteht die Möglichkeit den Korrosionsinhibitor erst kurz vor der Anwendung der Dispersion zuzufügen.

Um die Dispersion weiter, zum Beispiel gegen Absetzen des Abrasives, Ausflockungen und Zersetzung des Oxidationsmittels zu stabilisieren, können ihr oberflächenaktive Stoffe zugesetzt werden, die nichtionischer, kationischer, anionischer und/oder amphoterer Art sind.

Die Teilchengröße des Mischoxides in der Dispersion ist bevorzugter Weise kleiner als 150 nm. Besonders bevorzugt ist der Bereich kleiner als 100 nm. Teilchen dieser Größenordnung erfüllen vorteilhafterweise die immer strengeren Anforderungen der Halbleiterindustrie, die wegen der fortschreitenden Miniaturisierung der Bauteile extrem feine Abrasivpartikel fordert.

Ein weiterer Gegenstand der Erfindung ist ein Verfahren zur Herstellung der Dispersion enthaltend ein Silizium-Aluminium-Mischoxid mit Dispergier- und/oder Mahlvorrichtungen, die einen Energieeintrag von mindestens 200 KJ/m³ bewirken. Hierzu zählen Systeme nach dem Rotor-Stator-Prinzip, zum Beispiel Ultra-Turrax-Maschinen, oder Rührwerkskugelmühlen. Höhere Energieeinträge sind mit einem Planetenkneter/-mixer möglich. Die Wirksamkeit dieses Systems ist jedoch mit einer ausreichend hohen Viskosität der bearbeiteten Mischung verbunden, um die benötigten hohen Scherenergien zum Zerteilen der Teilchen einzubringen.

Mit Hochdruckhomogenisierern können wässerige Dispersionen erhalten werden, die Silizium-Aluminium-Mischoxidteilchen enthalten, die kleiner als 150 nm sind und bevorzugt kleiner 100 nm sind.

Bei diesen Vorrichtungen werden zwei unter hohem Druck stehende vordispergierte Suspensionsströme über eine Düse entspannt. Beide Dispersionsstrahlen treffen exakt aufeinander und die Teilchen mahlen sich selbst. Bei einer anderen Ausführungsform wird die Vordispersion ebenfalls unter hohen Druck gesetzt, jedoch erfolgt die Kollision der Teilchen gegen gepanzerte Wandbereiche. Die Operation kann beliebig oft wiederholt werden um kleinere Teilchengrößen zu erhalten.

Eine sehr feinteilige Dispersion mit einer mittleren Teilchengröße d₅₀ von 90 nm erhält man nach Dispergierung und Vermahlung einer 12,5 prozentigen Dispersion eines Silizium-Aluminium-Mischoxides, welches nach EP-A-1048617 hergestellt wurde, enthaltend ca. 70 Gew.-% Aluminiumoxid bei einem pH von 10,5, einem Druck von 1500 kg/cm² und fünfmaligen Durchgang durch die Dispergiervorrichtung.

Mit dem gleichen Material kann auch im sauren pH-Bereich eine sehr feinteilige Dispersion hergestellt werden. Bei einem pH-Wert von 4 wird bei einer 6 prozentigen Dispersion, enthaltend ein Mischoxid mit ca. 70 Gew.-% Aluminiumoxid, einem Druck von 1500 kg/cm² und dreimaligem Durchgang durch die Dispergiervorrichtung eine mittlere Teilchengröße d₅₀ von 118 nm ermittelt.

Bei Verwendung eines nach DE-A-19847161 hergestellten dotierten Silizium-Aluminium-Mischoxides, enthaltend 0,25 Gew.-% Aluminiumoxid, bezogen auf den Feststoff, werden in einer 25 prozentigen, wässerigen Dispersion bei einem pH von 10,5 ein mittlerer Teilchendurchmesser von 110 nm ermittelt.

Diese Vorrichtungen wurden bislang nur zur Dispergierung von chemisch einheitlichen Oxiden, wie Zinkoxid, Siliziumdioxid, Aluminiumoxid (UK-A-2 063 695, EP-A-876 841, EP-A-773 270, WO 00/172 282 A1) verwendet. Die Vermahlung und Dispergierung von Mischoxiden, die dieser Erfindung zu Grunde liegen, ist mit diesen Vorrichtungen bislang nicht beschrieben.

Ein weiterer Gegenstand der Erfindung ist die Verwendung der erfindungsgemäßen Dispersion zum chemisch-mechanischen Polieren von Halbleitersubstraten und aufgebrachten Schichten. Insbesondere eignet sich die Dispersion zum Polieren von oxidischen Oberflächen. Die Stabilität der Dispersion im basischen pH-Bereich auch bei hohen Aluminiumoxidanteilen erlaubt vorteilhafterweise hohe Abtragsraten bei einer weitestgehend mikrokratzerfreien Oberfläche.

Die gute Stabilität der erfindungsgemäßen Dispersion im sauren Bereich ermöglicht vorteilhafterweise in Gegenwart von weiteren Additiven, wie Oxidationsmittel und oberflächenaktiven Substanzen, das Polieren von Metallschichten. Hier zeigt sich, dass die Selektivität Aluminium-Metallschicht/Siliziumdioxid-Oberfläche gegenüber einer Dispersion gemäß dem Stand der Technik, die nur Aluminiumoxid anstelle des Silizium-Aluminium-Mischoxides enthält, bis um den Faktor 3 verbessert werden kann. Die Verwendung zum Polieren von Metallschichten, die auf oxidischen Oberflächen aufgebracht sind, ist nicht auf Aluminium beschränkt. Die erfindungsgemäße Dispersion eignet sich zum chemisch-mechanischen Polieren von metallischen Filmen, die Aluminium, Aluminiumlegierungen, Kupfer, Kupferlegierungen, Wolfram, Titan, Titannitrid enthalten.

Außerdem eignet sich die erfindungsgemässe Dispersionen zur Herstellung sehr feinteiliger Oberflächenbeschichtungen im Papierbereich oder zur Erzeugung spezieller Gläser.

## Patentansprüche

1. Wässerige Dispersion enthaltend Silizium-Aluminium-Mischoxid-Pulver, **dadurch gekennzeichnet, dass** das Silizium-Aluminium-Mischoxid-Pulver von 0,1 bis 99,9 Gew.-% Al₂O₃ enthält und eine Struktur, enthaltend Si-0-Al-Bindungen und amorphe und/oder kristalline Siliziumdioxidbereiche und kristalline Aluminiumoxidbereiche aufweist.

2. Wässerige Dispersion nach Anspruch 1, **dadurch gekennzeichnet, dass** das Pulver Primärteilchen aus amorphem Siliziumdioxid und kristallinem Aluminiumoxid aus einem flammenhydrolytischen Prozeß, Mullitstrukturen mit einer chemischen Zusammensetzung von 3 Al₂O₃ x 2 SiO₂ bis 2 Al₂O₃ x SiO₂, mittels Aerosol mit Silizium dotiertes Aluminiumoxid oder mittels Aerosol mit Aluminiumoxid dotiertes Siliziumdioxid aus einem flammenhydrolytischen Prozeß und/oder mit Siliziumdioxid ganz oder teilweise umhülltes Aluminiumoxidpulver oder mit Aluminiumoxid ganz oder teilweise umhülltes Siliziumdioxidpulver enthält.

3. Wässerige Dispersion nach den Ansprüchen 1 bis 2, **dadurch gekennzeichnet, dass** das kristalline Aluminiumoxid alpha-, gamma-, delta-, theta- und kappa-Aluminiumoxid, pyrogen hergestelltes Aluminiumoxid und Mischungen der vorgenannten Aluminiumoxide umfaßt.

4. Wässerige Dispersion nach den Ansprüchen 1 bis 3, **dadurch gekennzeichnet, dass** die spezifische Oberfläche des Pulvers zwischen 5 und 300 m²/g liegt.

5. Wässerige Dispersion nach den Ansprüchen 1-4, **dadurch gekennzeichnet, dass** der Feststoffgehalt in der Dispersion zwischen 0,1 und 70 Gew.-% liegt.

6. Wässerige Dispersion nach den Ansprüchen 1 bis 5, **dadurch gekennzeichnet, dass** der pH-Wert der Dispersion zwischen 4 und 12,5 liegt.

7. Wässerige Dispersion nach den Ansprüchen 1 bis 6, **dadurch gekennzeichnet, dass** sie weiterhin ein Oxidationsmittel aus der Gruppe umfassend aus Wasserstoffperoxid, Wasserstoffperoxid-Addukten, organische und anorganische Persäuren, Iminopersäuren, Persulfate, Perborate, Percarbonate, oxidierende Metallsalze und/oder Mischungen daraus enthält.

8. Wässerige Dispersion nach den Ansprüchen 1 bis 7, **dadurch gekennzeichnet, dass** sie einen Oxidationsaktivator aus der Gruppe umfassend die Metallsalze von Ag, Co, Cr, Cu, Fe, Mo, Mn, Ni, Os, Pd, Ru, Sn, Ti, V und Mischungen daraus und/oder Carbonsäuren, Nitrile, Harnstoffe, Amide und/oder Ester enthält.

9. Wässerige Dispersion nach den Ansprüchen 1 bis 8, **dadurch gekennzeichnet, dass** sie einen Korrosionsinhibitor aus der Gruppe umfassend Benzotriazol, substituierte Benzimidazole, substituierte Pyrazine und/oder substituierte Pyrazole enthält.

10. Wässerige Dispersion nach den Ansprüchen 1 bis 9 **dadurch gekennzeichnet, dass** sie nichtionische, kationische, anionische oder amphotere oberflächenaktive Stoffe und/oder Mischungen daraus enthält.

11. Verfahren zur Herstellung der wässerigen Dispersion gemäß den Ansprüchen 1-10, **dadurch gekennzeichnet, dass** man das Silizium-Aluminium-Mischoxid in wässerigem Medium mit einem Energieeintrag von mindestens 200 KJ/m³ dispergiert.

12. Verfahren zur Herstellung der wässerigen Dispersion nach Anspruch 11, **dadurch gekennzeichnet, dass** man zur Vermahlung und Dispergierung des Silizium-Aluminium-Mischoxids in einem wässerigen Medium eine Vorrichtung verwendet, bei der die zu dispergierenden Teilchen unter hohem Druck stehen, über eine Düse entspannt werden und miteinander oder gegen Wandbereiche der Vorrichtung kollidieren.

13. Verwendung der wässerigen Dispersion gemäß den Ansprüchen 1 bis 10 zum chemisch-mechanischen Polieren von oxidischen Oberflächen.

14. Verwendung der wässerigen Dispersion gemäß den Ansprüchen 1 bis 10 zum chemisch mechanischen Polieren von Metallschichten aus der Gruppe enthaltend Aluminium, Aluminiumlegierungen, Kupfer, Kupferlegierungen, Wolfram, Titan, Titannitrid, wobei die Selektivität Metallfilm/Oxidschicht bei Verwendung der erfindungsgemäßen Dispersion enthaltend Silizium-Aluminium-Mischoxidpartikel höher ist als bei Verwendung einer Dispersion, die nur Aluminiumoxidpartikel enthält.

15. Verwendung der wässerigen Dispersion nach den Ansprüchen 1 bis 10 zur Erzeugung feinteiliger Oberflächenbeschichtungen im Papierbereich und zur Erzeugung spezieller Gläser.
